# EUROPÄISCHE PATENTANMELDUNG

(11) **EP 1 028 030 A2**
(43) Veröffentlichungstag der Anmeldung: **16.08.2000**
(21) Anmeldenummer: 00101622.9
(22) Anmeldetag: 28.01.2000
(51) Int. Cl.: B60R 11/02

(54) **Haltevorrichtung für ein Handtelefon in einem Kraftfahrzeug**

(30) Priorität: 12.02.1999 DE 19906051
(71) Anmelder: Volkswagen Aktiengesellschaft, 38436 Wolfsburg (DE)
(72) Erfinder: Bachorski, Tomasz, 59077 Hamm (DE); Stephan, Jörg, 38550 Isenbüttel (DE)

(57) **Zusammenfassung**

Die Erfindung betrifft eine Haltevorrichtung (3) für ein Handtelefon (4) als Handy in einem Kraftfahrzeug. Erfindungsgemäß ist eine nach oben offene Halteschale (5) in die Schalttafel (1), vorzugsweise in eine Mittelkonsole (2), integriert, wobei diese Halteschale (5) schubladenförmig von einer Nichtbenutzungsstellung (7), bei der eine vordere Halteschalenwand (6) eine durchgehende Oberfläche mit der umgebenden Wand bildet, in eine Gebrauchsstellung (8) zum Einstecken des Handtelefons (4) ausziehbar ist.

## Beschreibung

Die Erfindung betrifft eine Haltevorrichtung für ein Handtelefon als Handy in einem Kraftfahrzeug nach dem Oberbegriff des Anspruchs 1.

Unter Handtelefon bzw. Handy werden hier schnurlose Telefone verstanden, in denen alle für die Telekommunikation notwendigen Komponenten untergebracht sind, insbesondere ein Tastenfeld und ein Sichtschirm, oder auch Telefonhörer, die über eine Funkverbindung mit einer Basisstation verbunden sind.

Aus der Schrift JP 10016624 A ist eine gattungsgemäße Haltevorrichtung bekannt mit einer nach oben offenen Halteschale, in die das Handtelefon mit seinem unteren Bereich etwa vertikal stehend und mit seinem Tastenfeld in den Innenraum gerichtet einsteckbar ist. Diese Halteschale weist an ihrer Rückseite einen Bügel auf, mit dem die Halteschale am Lüftungsgitter einer Lüftungsöffnung in der Schalttafel einhängbar und befestigbar ist. Das Handtelefon ist in der Halteschale durch verstellbare Seiten- und Frontklammerteile fixierbar. Die Halterung dieser Halteschale kann auch für andere Gegenstände verwendet werden und ist mit einem verstellbaren Haltemechanismus aufwendig ausgebildet. Die Befestigung der Halteschale an einem Lüftungsgitter ist nur wenig stabil und optisch wenig ansprechend.

Aus der US-PS 5 048 083 ist weiter eine seitlich an einer Mittelkonsole im Fußraum eines Beifahrers anschraubbare Halterung bekannt, in die ein Handtelefon einsteckbar ist. Bei einer solchen Anordnung wird der Fußraum des Beifahrers ungünstig eingeschränkt und das Handtelefon ist für einen Fahrer nur ungünstig erreichbar und einsehbar.

Es ist zudem aus der JP 05211548 A bekannt, eine Halterung für ein Handtelefon auf der Schalttafel vor dem Lenkrad eines Fahrers zu befestigen. Ein dort angebrachtes Handtelefon liegt zwar optimal im Sichtbereich eines Fahrers, stört jedoch erheblich die Sicht nach vorne im normalen Fahrbetrieb.

In einer anderen Anordnung ist aus der JP 08230575 A bekannt, eine Halterung für ein Handtelefon seitlich an einer Sitzkopfstütze anzubringen. Hierbei mag unter Umständen eine direkte Kommunikation ohne Freisprechanlage möglich sein, ohne daß der Fahrer das Handtelefon zur Hand nimmt. Das Handtelefon liegt jedoch nachteilig außerhalb des Sichtbereichs in einer sehr ungünstigen Bedienposition.

Weiter ist ein Aufsatzteil als Haltevorrichtung für eine liegende Stellung des Handtelefons auf einer Mitteltunnelkonsole aus der DE 195 29 876 A1 bekannt. Die Fächer des Aufsatzteils sind variabel zur Aufnahme weiterer unterschiedlicher Gegenstände gestaltet und das Handtelefon ist auch hier für einen Fahrer in einem ungünstigen Sicht- und Bedienbereich.

Es ist weiter aus der DE 297 15 353 U1 bekannt, eine Haltevorrichtung für ein Handtelefon mit Anschlüssen, insbesondere für eine Stromversorgung, eine Außenantenne und eine Freisprechanlage auszurüsten, wobei die Verbindung zu zugeordneten Anschlüssen des Handtelefons bei dessen Einstecken in die Haltevorrichtung hergestellt wird.

Aufgabe der Erfindung ist es, eine gattungsgemäße Haltevorrichtung für ein Handtelefon in einem Kraftfahrzeug so weiterzubilden, daß eine optisch ansprechende Anordnung mit guter Funktion geschaffen wird.

Diese Aufgabe wird mit den Merkmalen des Anspruchs 1 gelöst.

Gemäß Anspruch 1 ist die Halteschale in die Schalttafel, vorzugsweise in eine Mittelkonsole integriert und schubladenförmig von einer Nichtbenutzungsstellung, bei der eine vordere Halteschalenwand eine durchgehende Oberfläche mit der umgebenden Wand bildet, in eine Gebrauchsstellung zum Einstecken des Handtelefons ausziehbar.

Damit wird vorteilhaft erreicht, daß die Schalttafel bzw. die Mittelkonsole an der Stelle der Halteschale in deren Nichtbenutzungsstellung eine optisch ansprechende, durchgehende Oberfläche mit der umgebenden Wand bildet, ohne daß das Vorhandensein einer Haltevorrichtung für ein Handtelefon auffällt. Damit liegt hier eine professionelle Lösung vor, die sich von den bisherigen, nachträglich anbringbaren und meist als störend empfundenen Autotelefon-Anbausätzen deutlich unterscheidet. Lediglich dann, wenn ein Handtelefon in einer Benutzungsstellung mitgeführt werden soll, wird die Halteschale schubladenförmig ausgezogen und das Handtelefon in die Halteschale eingesteckt.

Dabei liegt das Handtelefon in einem guten Sicht- und Bedienbereich ohne im Fahrbetrieb zu stören. Besonders günstig sind diese Verhältnisse, wenn die Halteschale aus einem Schacht und/oder an Führungen etwa in Fahrzeuglängsrichtung ausziehbar ist und der Schacht und/oder die Führungen im rechten Bereich der Mittelkonsole etwa in Höhe der Schalttafelunterkante angeordnet sind. Damit bleibt der mittlere Bereich der Mittelkonsole für übliche Bedien- und Funktionselemente frei und das Handtelefon kann bequem sowohl von einem Fahrer als auch von einem Beifahrer eingesehen und bedient werden.

Das Handtelefon wird vorzugsweise in der Halteschale stabil durch einen Formschluß und/oder Klemmschluß gehalten.

Für eine Anpassung der Haltevorrichtung an unterschiedliche Handtelefon-Typen wird in einer ersten Ausführungsform vorgeschlagen, entsprechend unterschiedlich angepaßte Halteschalen als austauschbare Halteschalenmodule zur Verfügung zu stellen, wobei diese Halteschalenmodule zur Aufnahme jeweils unterschiedlicher, zugeordneter Handtelefon-Typen hergerichtet sind.

In einer anderen Art einer Anpassung an unterschiedliche Handtelefon-Typen werden einsetzbare und austauschbare Einsatzmodule vorgeschlagen, die zur Aufnahme jeweils unterschiedlicher, zugeordneter Handtelefon-Typen hergerichtet sind. Ein Einsatzmodul wird in die gleiche Halteschale formschlüssig eingesetzt und fixiert.

In einer besonders bevorzugten Weiterbildung wird vorgeschlagen, die Halteschale und/oder die Einsatzmodule mit Anschlüssen für eine Stromversorgung und/oder eine Außenantenne und/oder eine Freisprechanlage und/oder einen Verstärker mit Lautsprecher auszurüsten. Beim Einsetzen des Handtelefons sind die Verbindungen zu zugeordneten Anschlüssen am Handtelefon herstellbar. Dies vereinfacht den Betrieb eines Handtelefons erheblich, ohne daß unbequem und aufwendig von Hand Einzelanschlüsse zur Bordelektrik hergestellt werden müssen. Damit weist ein solches Handtelefon die gleichen Bedienungsannehmlichkeiten wie eine fest verdrahtete Autotelefonanlage auf mit dem zusätzlichen Komfort der fehlenden Kabelverbindung und der Möglichkeit der einfachen Mitnahme aus dem Fahrzeug.

Anhand einer Zeichnung wird die Erfindung näher erläutert.

Es zeigen:
- Fig. 1: einen schematischen Querschnitt durch eine Schalttafel eines Kraftfahrzeugs mit einer Haltevorrichtung für ein Handtelefon in einer Nichtbenutzungsstellung,
- Fig. 2: eine schematische Darstellung der Schalttafel nach Fig. 1 mit einer Haltevorrichtung in einer Gebrauchsstellung, und
- Fig. 3: eine schematische, perspektivische Ansicht einer Schalttafel eines Kraftfahrzeugs mit einem in eine Haltevorrichtung eingesteckten Handtelefon.

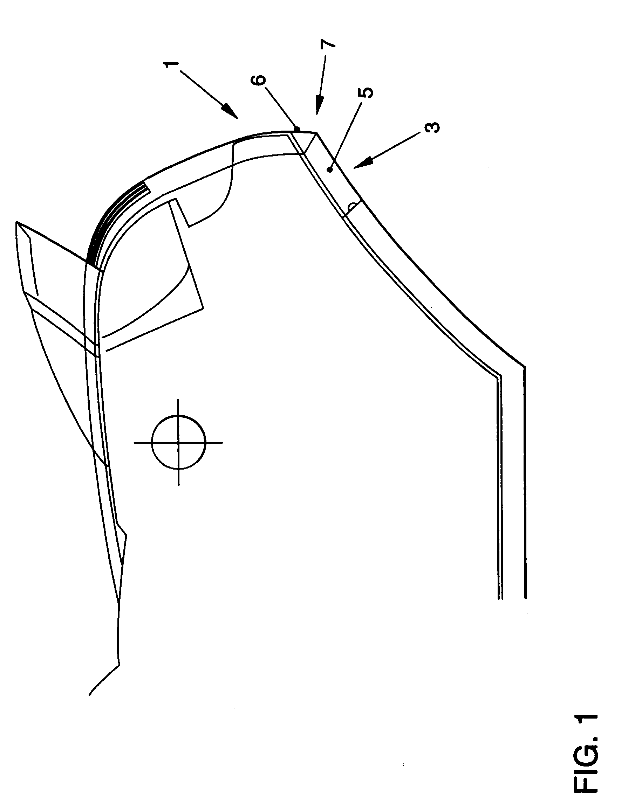

In der Fig. 1 ist schematisch ein Querschnitt durch eine Schalttafel 1 eines Kraftfahrzeugs dargestellt. An dieser Schalttafel 1 ist eine Haltevorrichtung 3 für ein Handtelefon 4 ausgebildet, die eine Halteschale 5 umfaßt. In der in der Fig. 1 dargestellten Nichtbenutzungsstellung 7 bildet die Halteschale 5 mit einer vorderen Halteschalenwand 6 eine durchgehende Oberfläche mit der umgebenden Wand der Schalttafel 1.

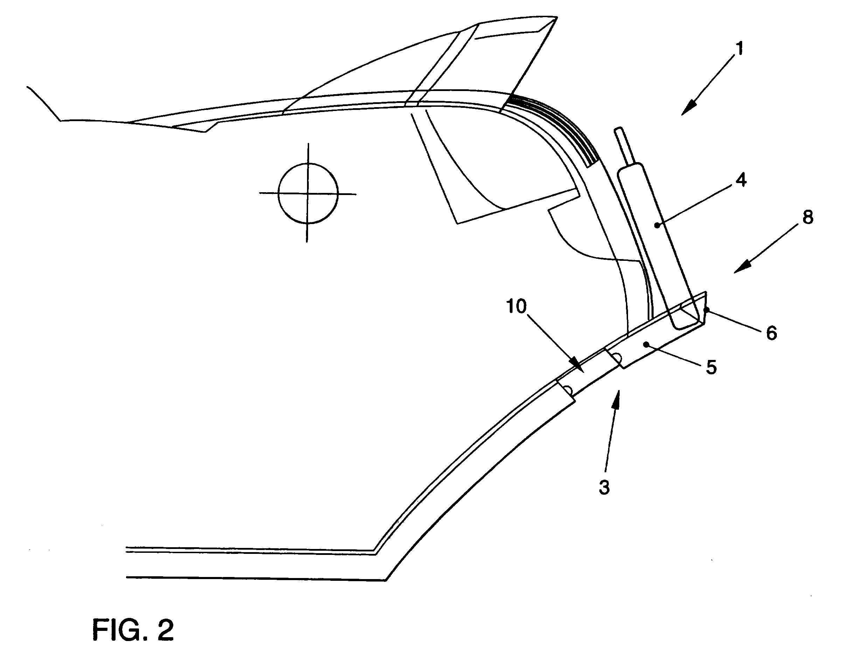

Aus dieser in der Fig. 1 dargestellten Nichtbenutzungsstellung 7 kann die Halteschale 5 in eine in der Fig. 2 dargestellte Gebrauchsstellung 8 zum Einstecken des Handtelefons 4 ausgezogen werden. Zur Aufnahme des Handtelefons 4 ist die Halteschale 5 nach oben offen ausgebildet, wobei das Handtelefon 4 in der Halteschale 5 durch einen Formschluß gehalten wird.

Für eine Anpassung an unterschiedliche Handtelefon-Typen kann in die Halteschale 5 ein austauschbares Einsatzmodul, das hier allerdings nicht dargestellt ist, eingesetzt werden. Dieses Einsatzmodul ist zur Aufnahme jeweils unterschiedlicher Handtelefon-Typen hergerichtet.

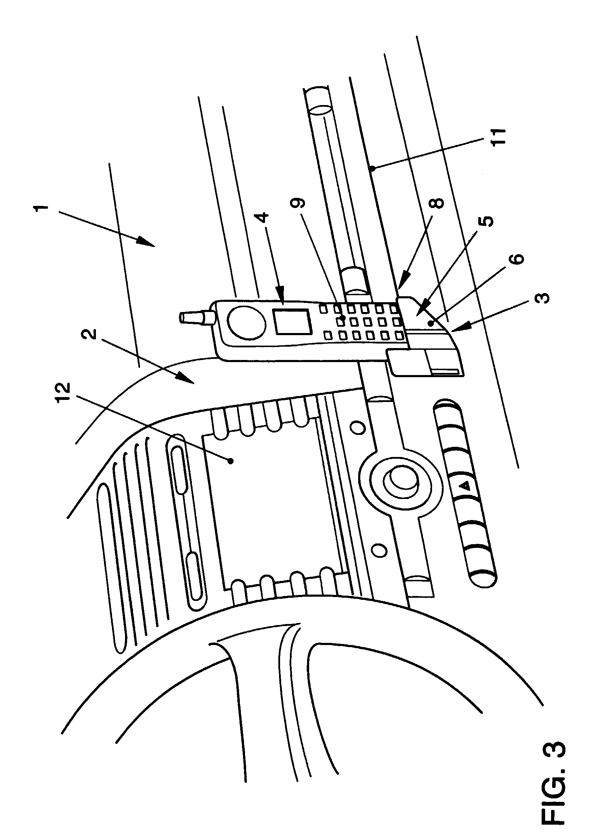

In der Gebrauchsstellung 8 ist das Handtelefon 4 mit seinem unteren Bereich formschlüssig und etwa vertikal stehend in die Halteschale eingesteckt, wobei, wie dies in der Fig. 3 ersichtlich ist, das Tastenfeld 9 des Handtelefons in den Innenraum gerichtet ist.

Wie dies der Fig. 3 weiter entnommen werden kann, ist die Haltevorrichtung 3 bevorzugt im rechten unteren Bereich einer Mittelkonsole 2 in Höhe der Schalttafelunterkante 11 angeordnet. Dadurch bleibt der mittlere Bereich der Mittelkonsole 2 für übliche Bedien- und Funktionselemente, wie z. B. einen Bildschirm 12 eines Satellitennavigationssystems, frei.

Aus Fig. 2 ist ferner ersichtlich, daß die Halteschale 5 aus einem Schacht 10 über Führungen geführt in etwa in Fahrzeuglängsrichtung ausziehbar ist. Die Halteschale 5 ist mit Anschlüssen für eine Stromversorgung und/oder eine Außenantenne und/oder eine Freisprechanlage und/oder einen Verstärker mit Lautsprecher ausgerüstet, was hier allerdings nicht dargestellt ist. Beim Einsetzen des Handtelefons 4 sind die Verbindungen zu zugeordneten Anschlüssen am Handtelefon 4 herstellbar.

Ein gegebenenfalls für eine Anpassung an unterschiedliche Handtelefon-Typen verwendetes und austauschbares Einsatzmodul muß selbstverständlich entsprechende elektrische Kontakte aufweisen, um eine sichere elektrische Verbindung zwischen dem durch das Einsatzmodul aufgenommenen Handtelefon und den erwähnten Anschlüssen der Halteschale 5 zu gewährleisten

Soll die Haltevorrichtung 3 benutzt werden kann die Halteschale 5 vom Benutzer auf einfache Weise aus der in der Fig. 1 dargestellten Nichtbenutzungsstellung 7 in die in der Fig. 2 dargestellte Gebrauchsstellung 8 ausgezogen werden und dann das Handtelefon in die Halteschale 5 eingesteckt werden. Wird die Haltevorrichtung 3 nicht oder nicht mehr. benötigt, kann diese in der Nichtbenutzungsstellung 7 belassen werden bzw. wird die Halteschale 5 in den Schacht 10 eingeschoben, wobei dann eine optisch ansprechende, durchgehende Oberfläche mit der umgebenden Wand gebildet wird, ohne daß das Vorhandensein einer Haltevorrichtung für ein Handtelefon auffällt.

### BEZUGSZEICHENLISTE

- 1: Schalttafel
- 2: Mittelkonsole
- 3: Haltevorrichtung
- 4: Handtelefon
- 5: Halteschale
- 6: Halteschalenwand
- 7: Nichtbenutzungsstellung
- 8: Gebrauchsstellung
- 9: Tastenfeld
- 10: Schacht
- 11: Schalttafelunterkante
- 12: Bildschirm

## Patentansprüche

1. Haltevorrichtung für ein Handtelefon als Handy in einem Kraftfahrzeug, mit einer Schalttafel und einer dort angebrachten, nach oben offenen Halteschale, in die das Handtelefon mit seinem unteren Bereich formschlüssig, etwa vertikal stehend und mit seinem Tastenfeld in den Innenraum gerichtet einsteckbar ist,
**dadurch gekennzeichnet,**
daß die Halteschale (5) in die Schalttafel (1), vorzugsweise in eine Mittelkonsole (2) integriert ist und schubladenförmig von einer Nichtbenutzungsstellung (7), bei der eine vordere Halteschalenwand (6) eine durchgehende Oberfläche mit der umgebenden Wand bildet, in eine Gebrauchsstellung (8) zum Einstecken des Handtelefons (4) ausziehbar ist.

2. Haltevorrichtung nach Anspruch 1,
**dadurch gekennzeichnet,**
daß die Halteschale (5) aus einem Schacht (10) und/oder an Führungen etwa in Fahrzeuglängsrichtung ausziehbar ist, wobei der Schacht (10) und/oder die Führungen im rechten Bereich der Mittelkonsole (2) etwa in Höhe der Schalttafelunterkante (11) angeordnet sind.

3. Haltevorrichtung nach Anspruch 1 oder Anspruch 2,
**dadurch gekennzeichnet,**
daß die Halteschale (5) eine Klemmvorrichtung zur Halterung des Handtelefons (4) aufweist.

4. Haltevorrichtung nach einem der Ansprüche 1 bis 3,
**dadurch gekennzeichnet,**
daß unterschiedliche Halteschalen (5) als austauschbare Halteschalenmodule zur Verfügung stehen, die zur Aufnahme jeweils unterschiedlicher, zugeordneter Handtelefon-Typen hergerichtet sind.

5. Haltevorrichtung nach einem der Ansprüche 1 bis 3,
**dadurch gekennzeichnet,**
daß für eine Halteschale (5) einsetzbare und austauschbare Einsatzmodule zur Verfügung stehen, die zur Aufnahme jeweils unterschiedlicher, zugeordneter Handtelefon-Typen hergerichtet sind.

6. Haltevorrichtung nach einem der Ansprüche 1 bis 5,
**dadurch gekennzeichnet**,
daß die Halteschale (5) Anschlüsse für eine Stromversorgung und/oder eine Außenantenne und/oder eine Freisprechanlage und/oder einen Verstärker mit Lautsprecher aufweist und beim Einsetzen des Handtelefons die entsprechenden Verbindungen zu zugeordneten Anschlüssen am Handtelefon herstellbar sind.

7. Haltevorrichtung nach Anspruch 5 und 6,
**dadurch gekennzeichnet,**
daß die einsetzbaren und austauschbaren Einsatzmodule entsprechende elektrische Kontakte aufweisen, derart, daß eine sichere elektrische Verbindung zwischen dem gerade aufgenommenen Handtelefon und den Anschlüssen der Halteschale (5) gewährleistet ist.
